Europäisches Patentamt

European Patent Office

Office européen des brevets

(11) Publication number: **0 230 340**
A2

# EUROPEAN PATENT APPLICATION

(21) Application number: 87300007.9

(51) Int. Cl.⁴: **G 06 F 15/38**

(22) Date of filing: 02.01.87

(30) Priority: 14.01.86 JP 5580/86

(43) Date of publication of application:
29.07.87 **Bulletin 87/31**

(84) Designated Contracting States. **DE FR GB**

(71) Applicant: **Kabushiki Kaisha Toshiba**
**72, Horikawa-cho Saiwai-ku**
**Kawasaki-shi Kanagawa-ken 210 (JP)**

**Toshiba Computer Engineering Corporation**
**2-9, Suehiro-cho**
**Oome-shi Tokyo (JP)**

(72) Inventor: **Koyama, Kazuo**
**A-109, Toshiba-Hakuun-Ryo 2-30-18 Tamagawa**
**Oota-ku Tokyo (JP)**

**Takeda, Kimihito c/o Patent Division**
**Kabushiki Kaisha Toshiba 1-1 Shibaura 1-chome**
**Minato-ku Tokyo 105 (JP)**

**Amano, Shin-Ya c/o Patent Division**
**Kabushiki Kaisha Toshiba 1-1 Shibaura 1-chome**
**Minato-ku Tokyo 105 (JP)**

**Yamanaka, Noriko c/o Patent Division**
**Kabushiki Kaisha Toshiba 1-1 Shibaura 1-chome**
**Minato-ku Tokyo 105 (JP)**

(74) Representative: **Freed, Arthur Woolf et al**
**MARKS & CLERK 57-60 Lincoln's Inn Fields**
**London WC2A 3LS (GB)**

(54) **Machine translation system.**

(57) A machine translation system has an input unit (I). a dictionary section (5). a translation processor (2. 3. 4. 6). and an output unit (7. 8. 9). The translation processor (2. 3. 4. 6) includes an interrupt instruction unit (3) and an interrupt processor (4). An original sentence is input through the input unit (I). The dictionary section (5) stores language information used in translation processing. The translation processor (3. 4) performs translation processing. referring the language information. A translated sentence obtained by the translation processing is output from the output unit (7. 8. 9). The interrupt instruction unit (3) instructs interruption of the translation processing. The interrupt processor (4) interrupts the translation processing in response to the instruction from the interrupt instruction unit (3). and causes the output unit to output the translated parts of a sentence processed at that time.

EP 0 230 340 A2

## Description

### Machine translation system

The present invention relates to a machine translation system for processing an original sentence to obtain a translated sentence and, more particularly, to a machine translation system which can improve translation processing efficiency and can obtain a naturally translated sentence.

In recent years, various machine translation systems which perform translation by using a computer, e.g., a processing system for translating English sentences into Japanese sentences or a processing system for translating Japanese sentences into English sentences, have been developed.

Basic processing in a conventional machine translation system will be briefly described.

(I) Morphological, syntactic, and semantic analyses are performed for a given original sentence, and the original sentence is divided into predetermined units, e.g., words (or phrases).

(2) A dictionary (translation dictionary) as a data base of language information necessary for translation processing is looked up to obtain translated words (or translated phrases) equivalent to the units of the original sentence.

(3) These translated words (translated phrases) are connected according to predetermined syntactic rules for translated sentence generation, thus generating a translated sentence of the original sentence.

However, in the natural language, since there are great number of verbal expression modes, a technique for interpreting verbal meanings has not yet been established. For this reason, it is difficult for the above-mentioned machine translation to immediately provide an appropriate translated sentence.

When a conventional machine translation system provides a plurality of translation possibilities, these possibilities are displayed in a specific manner on a display screen. The operator selects the possibility which he or she think is most appropriate, thus obtaining a final translated sentence. In some systems, the selected, translated sentence can be post-edited by interactive processing by the operator.

When a given original sentence is complex or long, or when a given original sentence contains syntactic errors, or when an original sentence having a syntactic structure which has not been regarded as an object of the translation processing has been input, translation processing inevitably requires a considerably long period of time. In some systems, when a time required for the translation processing is prolonged, the translation processing is interrupted, and the translation processing is tried in another translation processing mode.

For example, when a given sentence cannot be translated within a preset period of time, the translated processing units of the sentence are obtained and displayed. The operation combines these translated unit thereby to obtain a translation of the complete sentence.

During execution of translation processing of an original sentence, the translation processing is often interrupted temporarily so as to perform post-edit processing of the already obtained translated sentence or to correct an original sentence itself.

However, in the conventional system, when the translation processing is interrupted upon generation of an interrupt instruction during execution of the translation processing, information obtained in the current translation processing is lost. For this reason, information obtained during the translation processing cannot be utilized for post processing. Therefore, when translation processing is interrupt during its execution, the current translation processing is rendered quite in vain.

The present invention has been made in consideration of the above situation, and has as its object to provide a machine translation system which can utilize translation information obtained in part of translation processing even when translation processing is interrupted, can eliminate wasteful translation processing, and can improve translation processing efficiency.

The machine translation system of the present invention translates an original sentence, input from an input unit, in accordance with language information stored in a translation dictionary. When interruption of translation processing is instructed, the processing proceeding at this time to translate one sentence is not interrupted until the results of the translation processing is output, thereby raising the efficiency of translation. (Hereinafter, these results will be called "translated parts of the sentence".)

In the machine translation system of the present invention, when translation processing lasts too long due to an insufficient semantic analysis capability for an original sentence, or when other processing is performed during the translation processing, transient information obtained at that time, i.e., translated parts of the sentence, can be output and displayed upon instruction of interruption of the translation processing. Therefore, the transient information can be utilized for translation processing thereafter, for example, can be subjected to post-edit processing to complete a translated sentence in an interactive manner. Thus, wasteful translation processing can be effectively eliminated. After a lapse of a given period of time upon starting of translation, the interrupt instruction can be supplied to prevent translation processing from being prolonged. More specifically, translation processing can be efficiently executed to provide translation.

This invention can be more fully understood from the following detailed description when taken in conjunction with the accompanying drawings, in which:

Fig. I is a block diagram showing the arrangement of a machine translation system according to an embodiment of the present invention;

Fig. 2 is an illustration showing a keyboard arranged on an input unit of the system shown in Fig. I;

Fig. 3 is a display format of a display unit in the system shown in Fig. I;

Fig. 4 is a flow chart showing a basic operation sequence in the system shown in Fig. I;

Fig. 5 is a block diagram showing the arrangement of a translation processor in the system shown in Fig. I;

Fig. 6 is a flow chart showing translation processing procedures in the system shown in Fig. I;

Fig. 7 is a flow chart showing translation interrupt processing procedures in the system shown in Fig. I;

Figs. 8A to 8D are display formats for explaining display states upon interruption of an interactive translation mode in the system shown in Fig. I; and

Figs. 9A to 9D are display formats for explaining display states upon interruption of a simultaneous translation mode in the system shown in Fig. I.

A machine translation system according to an embodiment of the present invention will now be described in detail with reference to the accompanying drawings.

In the system of this embodiment, an English sentence is input and translated into a Japanese sentence. Fig. I shows the schematic arrangement of this system.

The machine translation system comprises input unit I, original sentence memory 2, editing controller 3, translation processor 4, dictionary section 5, translated sentence memory 6, display controller 7, display unit 8, and printer 9. Input unit I inputs English sentences as original sentences and other information, and includes a keyboard or the like for allowing an operator to input information. An English sentence (including punctuation signs and spaces) constituted by character string information input through input unit I is an original sentence subjected to translation processing, and is stored in original sentence memory 2.

Translation processor 4 is operated under the control of editing controller 3, and translates the original sentence. More specifically, in the translation processing of processor 4, dictionary section 5 which prestores language information necessary for the translation processing is looked up, so that the original sentence stored in memory 2 is sequentially translated in predetermined processing units. A translated sentence (in this case, a Japanese sentence) obtained by processor 4 is managed so that the corresponding original sentence can be discriminated in the predetermined processing units, and is stored in translated sentence memory 6.

Language information prestored in dictionary section 5 includes, for example, inflection dictionary 5a. (translated) word dictionary 5b, analytic grammar information 5c. transfer grammar information 5d, syntactic grammar information 5e, and morphological grammar information 5f. Inflection dictionary 5a consists of information for obtaining a root (or a fundamental form) of a regular or irregular inflection form of a inflective word, that is, information indicating the correspondence between the regular or irregular inflection form of the inflective word and its root. Word dictionary 5b consists of information for obtaining corresponding translated words (or phrases) from words of the language of an original sentence, that is, information indicating the correspondence between words of the language of an original sentence and words or phrases (translated words or phrases) of the language of a translated sentence. Analytic grammar information 5c is grammar information necessary for syntactic analysis of an original sentence. Transfer grammar information 5d is grammar information necessary for generating a syntactic structure of a translated sentence. Morphological grammar information 5f is grammar information necessary for generating morphemes of a translated sentence to form it.

Display controller 7 controlled by editing controller 3 simultaneously displays an English sentence (original sentence) stored in memory 2 and a Japanese sentence (translated sentence) stored in memory 6 on display unit 8. Display unit 8 comprises, e.g., a CRT (Cathode Ray Tube) display Display controller 7 controls unit 8 so that, when English and Japanese sentences are displayed, corresponding portions thereof are dislayed on the screen of unit 8 in correspondence with each other. While original and translated sentences are displayed on unit 8, post-editing processing of the translated sentence is performed. The post-editing processing is performed in accordance with, e.g., control information supplied from input unit I, and in this processing, language information prestored in dictionary section 5 is looked up as needed.

Note that printer 9 forms a hard copy of a translated sentence (i.e., a Japanese sentence) which is completed by the post-editing processing.

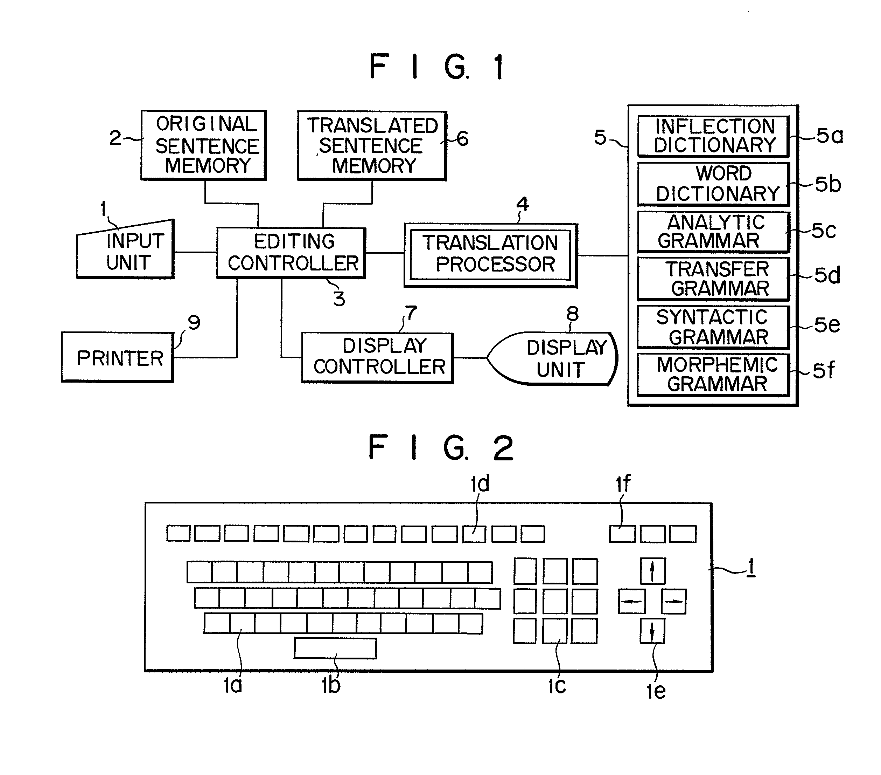

A keyboard constituting input unit I is configured as shown in Fig. 2. The keyboard has, e.g., character data input key group la, translation key lb, editing key group lc, function key group ld, cursor control key group le, and translation interrupt key lf. Cursor control key group le consists of a plurality of arrow (or direction) keys for shifting a cursor displayed on display unit 8 in predetermined directions. Translation interrupt key lf allows an operator to input an interrupt instruction of translation processing to the system.

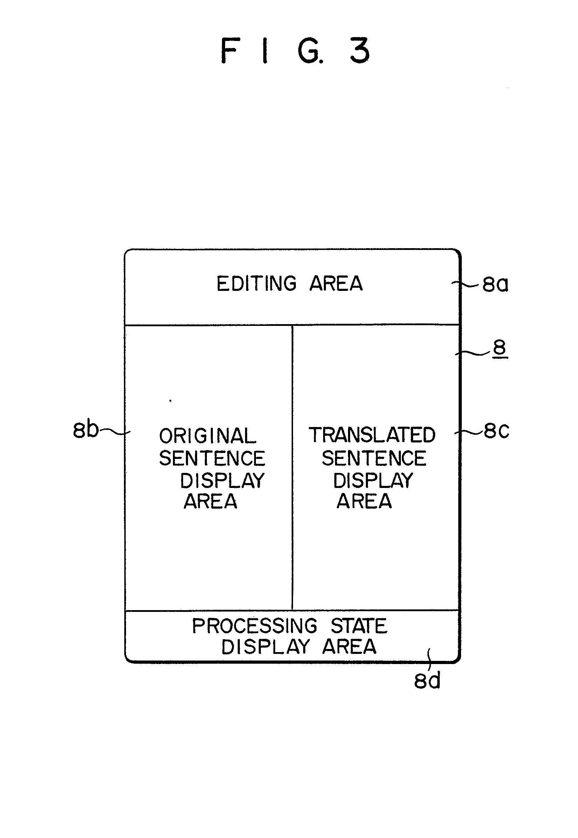

Fig. 3 shows a display format of the display screen of display unit 8. In this case, the display screen is divided into four areas, i.e., upper, middle left, middle right, and lower areas, which respectively serve as translation editing area 8a, original sentence display area 8b, translated sentence display area 8c, and processing state display area 8d.

Original sentence display area 8b divisionally displays an input original sentence (an English sentence) stored in memory 2 in the predetermined processing units, i.e., in units of sentences. Translated sentence display area 8c displays a translated sentence (Japanese sentence) stored in memory 6 in correspondence with the original sentence displayed on area 8b in the processing units. Translation editing area 8a displays language information which is necessary for translation processing and is searched from dictionary section 5, e.g., a translated sentence possibility and/or other information. Processing state display area 8d displays types of modes of translation processing, and its execution state.

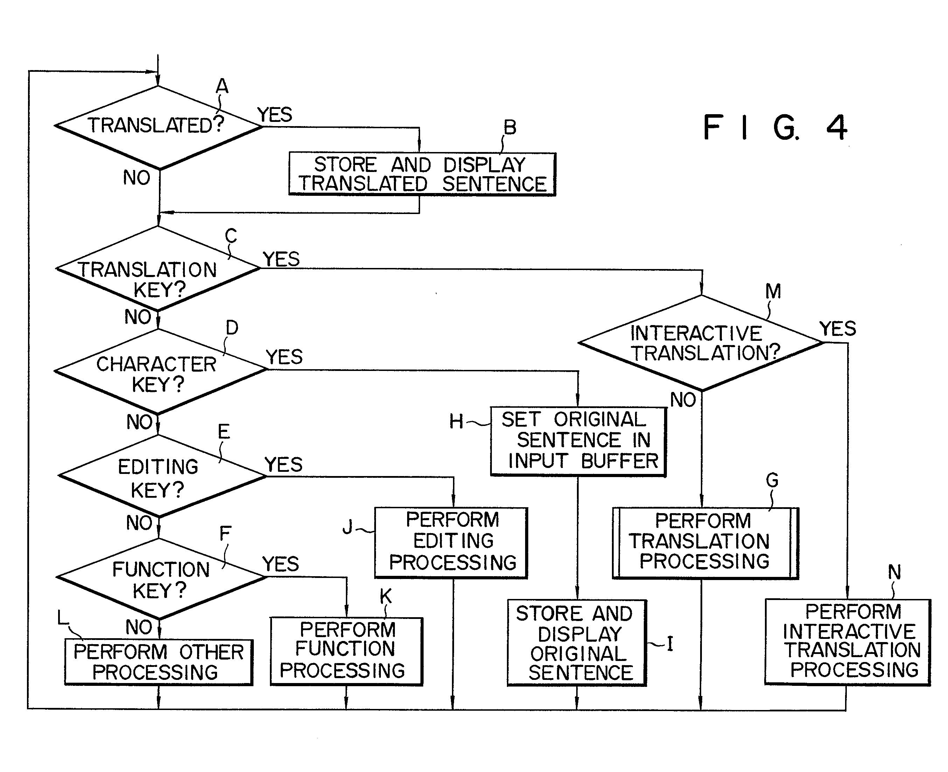

Fig. 4 shows the basic operation sequence in the system shown in Figs. I to 3.

Editing controller 3 sequentially discriminates translation end information supplied from processor 4 and various key information input from input unit I in accordance with the operation sequence shown in Fig 4. and controls translation and/or editing processing in an interactive manner.

More specifically, editing controller 3 monitors a translation processing state in processor 4 (step A). When processor 4 completes translation processing for one sentence (predetermined processing unit) in original sentences, processor 4 stores a translated sentence obtained by the translation processing in memory 6, and causes display unit 8 to display the translated sentence (step B).

When no translation end signal is obtained from translation processor 4, and when the translated sentence is stored and displayed, key information supplied from input unit I is discriminated (steps C, D, E, and F). In accordance with the discrimination result of the key information, the following processing is performed.

If the input key information is "translation key (Ib)" information (step C), controller 3 discriminates translation processing modes (step M). In this case, the translation processing modes include a simultaneous translation mode and an interactive translation mode. In the simultaneous translation mode, an original sentence can be sequentially and automatically translated in predetermined processing units, e.g., sentence by sentence, without requiring any operation of the operator. In the interactive translation mode, translation processing progresses together with operations of the operator for, e.g., selecting a translation possibility. When the simultaneous translation mode is selected, controller 3 reads out original sentences stored in original sentence memory 2 sentence by sentence, and supplies it to processor 4 to perform the translation processing (step G). In the interactive translation mode, if original sentences are being input from input unit I, controller 3 supplies the original sentence to processor 4 each time the original sentence is input from input unit I. If original sentences have already been input, controller 3 reads out one of the original sentences stored in memory 2. and supplies it to processor 4, thus performing translation processing (step N).

When the input key information is "character key (Ia)" information (step D). a character code corresponding to the depressed character key is stored in an input buffer (step H). is stored in memory 2, and is supplied to display controller 7. Controller 7 causes display unit 8 to display a character pattern corresponding to the input character code. In this manner, character patterns of the character codes stored in the input buffer are sequentially displayed, so that an original sentence consisting of a character string input from input unit I is displayed (step I).

When the input key information is "editing key (Ic)" information (step E), editing processing corresponding to the depressed editing key is executed for the translated sentence (step J). Similarly, when the input key information is "function key (Id)" information (step F). function processing corresponding to the depressed function key is executed (step K).

When no key information is input, or when key information other than the above-mentioned key information is input. other processing (step L) is performed. Other processing includes generation of a hard copy of a translated sentence stored in memory 6 (by printer 9).

With the operation sequence of editing controller 3, for example, when the operator operates some character keys Ia of the keyboard, pieces of character information corresponding to the operated keys are sequentially set in the input buffer and are sequentially stored in memory 2 as an original sentence to be subjected to translation processing (steps D and H). Then, the original sentence is displayed on original sentence display area 8b of display unit 8 (step I).

At any time during the character input operation, e.g., when the input operation of one sentence is completed, if the operator depresses translation key Ib to instruct translation phrase in a desired mode, the translation processing of the original sentence stored in the input buffer is started in the designated mode in accordance with the input key information (steps C, M, and N). More specifically, when the interactive translation mode is selected, translation processing with the operation of the operator is started. When the simultaneous translation processing is selected, the original sentences stored in memory 2 are read out therefrom sentence by sentence, and are automatically translated.

Upon completion of this translation processing, a translated sentence obtained thereby is displayed on translated sentence display area 8c of display unit 8 (steps A and B).

During or after the input operation of the original sentence, if an already input original sentence is to be corrected, cursor control keys Ie are appropriately operated in an original sentence input enable state by means of character keys Ia to adjust a cursor to a position to be corrected. Then, editing keys Ic including "correction", "insertion" and "delete" keys are selectively operated, thus performing editing processing, e.g., correction, insertion, delete, and the like.

Editing processing for the translated sentence is similarly performed selectively using function keys Id having desired functions. Function keys Id include a "translated word display key", a "dictionary display key", a "dictionary registration key", a "dictionary delete key", a "partial translation key", and a "modification key". With the "translated word display key", another translated word possibility of an arbitrary word in the translated sentence (e.g., a word indicated by a cursor) can be displayed. With the "dictionary display key", the content of dictionary section 5 of an arbitrary word in the original sentence (e.g., a word indicated by a cursor) can be displayed. With the "dictionary registration key", an arbitrary word or phrase can be registered in dictionary section 5. With the "dictionary delete key", arbitrary word or phrase of those registered in dictionary section 5 can be deleted from the dictionary. With the "partial translation key", a partial translation, obtained during the translation processing, of an original sentence whose translation processing is unsuccessful can be displayed as auxiliary information. With the "modification key", a translation possibility of a word or phrase indicated by a cursor by another modification relationship can be displayed as auxiliary information.

"Translation interrupt key" If can be considered as a kind of functional key. However, unlike the above-mentioned other functional keys, key If initiates interrupt processing (to be described later). Upon operation of "translation interrupt key" If, an interrupt instruction of translation processing is supplied to processor 4.

In this manner, the basic operation of the machine translation processing is performed.

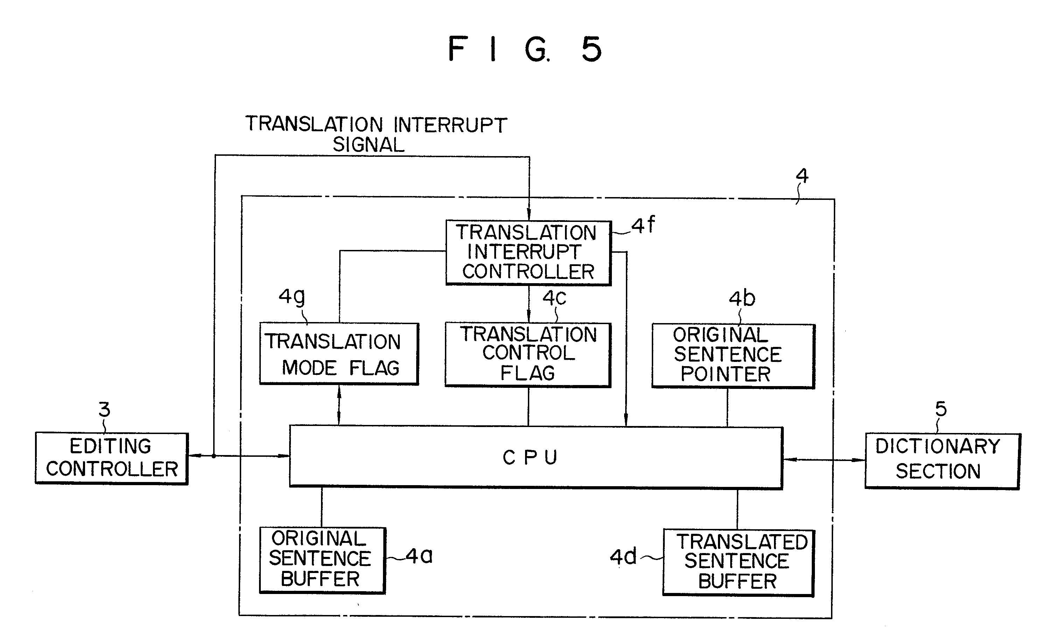

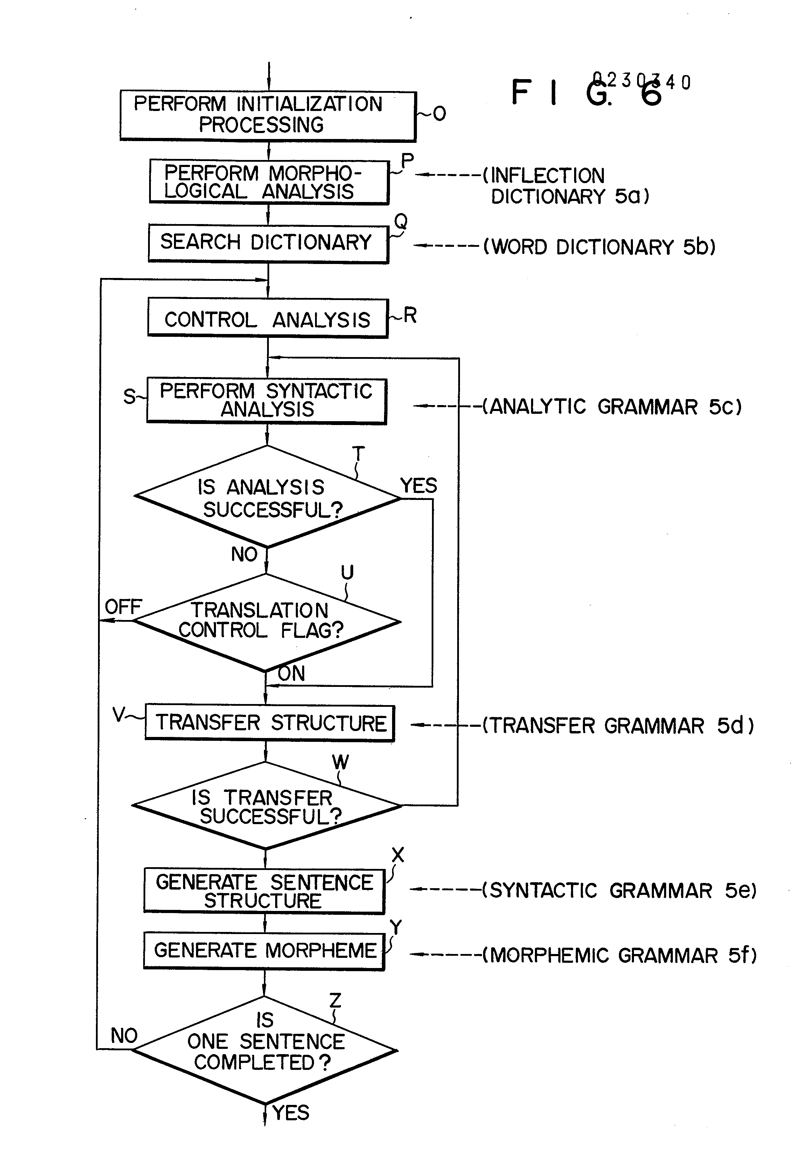

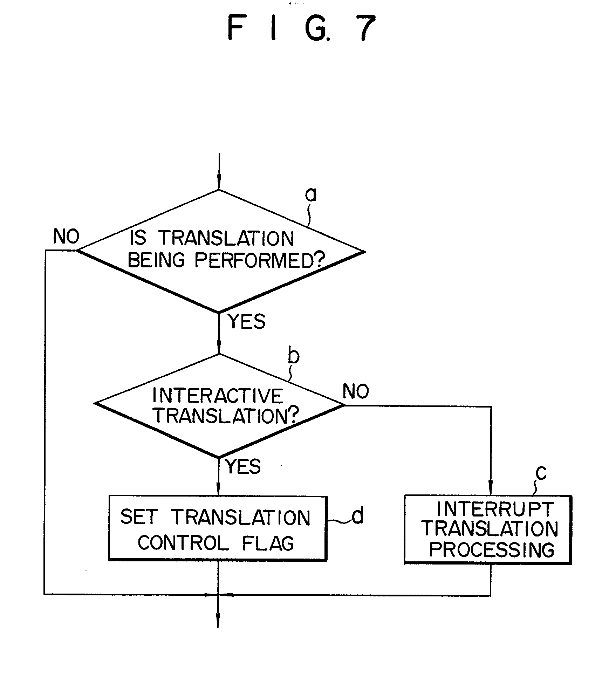

Processor 4 is configured as shown in Fig. 5, and progresses the translation processing in accordance with processing procedures shown in Figs. 6 and 7.

As shown in Fig. 5, processor 4 comprises original sentence buffer 4a, original sentence pointer 4b, translation control flag 4c, translated sentence buffer 4d, CPU 4e, translation interrupt controller 4f, and translation mode flag 4g.

When translation processing is started, initialization processing for the translation processing is performed under the control of CPU 4e (step O). In this initialization processing, an original sentence supplied from controller 3 is stored in original sentence buffer 4a, and original sentence pointer 4b is set so as to indicate a starting word of the original sentence. Simultaneously, translation control flag 4c and translated sentence buffer 4d are reset.

CPU 4e performs morphological analysis of the original sentence so as to analyze morphology of the original sentence (step P). In this morphemic analysis, morphemes as minimum units constituting a sentence are analyzed, and inflection dictionary 5a is looked up during morphemic analysis. With this morphological analysis, a conjugated or inflected word is transferred to its root (fundamental form). More specifically, a verb expressed in a past tense or a present or past participial is transferred to its present form, and an adjective or adverb expressed in its comparative or superlative degree is transferred to its root.

Translated word information and part-of-speech information corresponding to the original words of the original sentence which are analyzed into morphemes as described above are obtained with reference to word dictionary 5b (step Q). This processing is executed so that word dictionary 5b is searched using the respective original words as index words.

Syntactic analysis of the original sentence is performed under the analytic control according to analytic grammar information 5c (step S). The syntactic analysis is controlled according to discrimination of the syntactic analysis result and translation control flag 4c (steps T and U), and is repetitively performed until the syntactic analysis of the original sentence is successful. With this syntactic analysis, the structure of parts of speech of original words constituting the original sentence, the modification relationship of the parts of speech or a part-of-speech string, a mode of a tense, and the like are obtained.

Thereafter, the syntactically analyzed structure of the original sentence is transferred to the syntactic structure of the translated sentence using transfer grammar information 5d (step V). More specifically, the syntactic structure of an English sentence (original sentence) is transferred to that of a Japanese sentence (translated sentence). If the syntactic structure transfer operation is unsuccessful (step W), it is discriminated that the syntactic analysis of the original sentence includes an error, and the syntactic analysis is restarted for the original sentence.

Translated word possibilities obtained for the respective original words of the original sentence based on the syntactic structure of the translated sentence are reordered according to the morphemic structure of the translated sentence so as to generate the structure of the translated sentence, thus obtaining a translated sentence possibility corresponding to the original sentence (step X). This processing is called syntactic structure generation processing, and is executed with reference to syntactic grammar information 5f.

The translated word possibilities (fundamental forms) constituting the translated sentence possibility are subjected to conjugation and inflection processing in accordance with the syntactic analysis results of the original sentence and morphological grammar information 5f to generate morphemes. Thus, the translated sentence is completed to be a translated sentence as an appropriate. expression in the language of the translated sentence (step Y).

The series of translation processing is repetitively performed while updating pointer 4b up to a word at the end of the input original sentence (step Z), thus obtaining a translated sentence of the original sentence. When a plurality of translated sentences are obtained for one original sentence, only one of them is displayed, and a message indicating that other translated sentences are present is preferably displayed, so that a displayed translated sentence is changed and selected upon instruction of the operator.

When an interrupt instructin of translation processing is supplied from, e.g., input unit I to processor 4 through controller 3, translation interrupt controller 4f controls the translation processing in accordance with procedures shown in Fig. 7.

More specifically, upon generation of an interrupt instruction of translation processing, controller 4f checks if the translation processing for an original sentence is being executed (step a). If YES in step a, the interrupt instruction is accepted, and it is checked if the translation processing is performed in the interactive or simultaneous translation mode (step b). The translation mode is discriminated with reference to translation mode flag 4g which is set in accordance with the translation modes.

During execution of the simultaneous translation processing, input original sentences are read out from memory 2 sentence by sentence to execute the processing. For this reason, even if the translation processing is interrupted, an identical original sentence can be read out to resume the translation processing. Therefore, when the interrupt instruction is supplied, the translation processing is immediately interrupted (step c). A message indicating that the simultaneous translation processing is interrupted is displayed on display unit 8.

In this case, original sentences which are not yet subjected to translation processing are left in memory 2. Thereafter, when a simultaneous translation instruction is supplied, the translation processing is resumed, and nontranslated original sentences left in memory 2 are subjected to translation processing. Processor 4 prepares for translation processing for other original sentences or post-edit processing of the translation result upon above-mentioned interruption of translation processing.

When interruption of the translation processing is instructed during the interactive translation processing, translation control flag 4c is set (step d). The above-mentioned translation processing procedures are partially simplified by flag 4c, and a partial translation as transient information of the translation processing is output.

More specifically, in the flow of translation processing procedures shown in Fig. 6, when the interrupt instruction of translation processing is input during its execution, control enters syntactic structure transfer processing in accordance with flag 4c even if syntactic analysis of the input original sentence is unsuccessful (step U). As a result, CPU 4e performs syntactic structure transfer processing for each predetermined processing unit (partial structure) in accordance with the currently obtained syntactic analysis result of the original sentence, and also generates a new structure and morphemes, thus obtaining translated parts of the sentence, up to a word indicated by pointer 4b.

These translated parts are stored in translation buffer 4d as transient information, and are output. In this case, remaining (unanalyzed) original words in translation processing of one sentence can be output together with its partial translations. In this case, a message indicating that interactive translation is interrupted is also displayed.

Therefore, the translation processing procedures are simplified upon generation of an interrupt instruction of the translation processing. After translation transient information obtained when the translation processing simplified by the interrupt processing of the translation processing is ended is output, the translation processing is interrupted. After interruption of the processing, control is returned to controller 3, and post-edit processing of the obtained translated sentence, correction processing of the input original sentence, and other processing are performed.

Figs. 8A to 8D show detailed display states of display unit 8 in the interactive translation mode.

Fig. 8A shows a display state when interactive translation is started by the translation key after one original sentence is completely input. In original sentence display area 8b, input original sentence Il "This is a book." with sentence number "<l>" is displayed. Then, sentence number "<2>" and cursor l2 indicating the next original sentence display position are displayed. In processing state display area 8d, message l3 indicating "interactive translation processing being executed" is displayed.

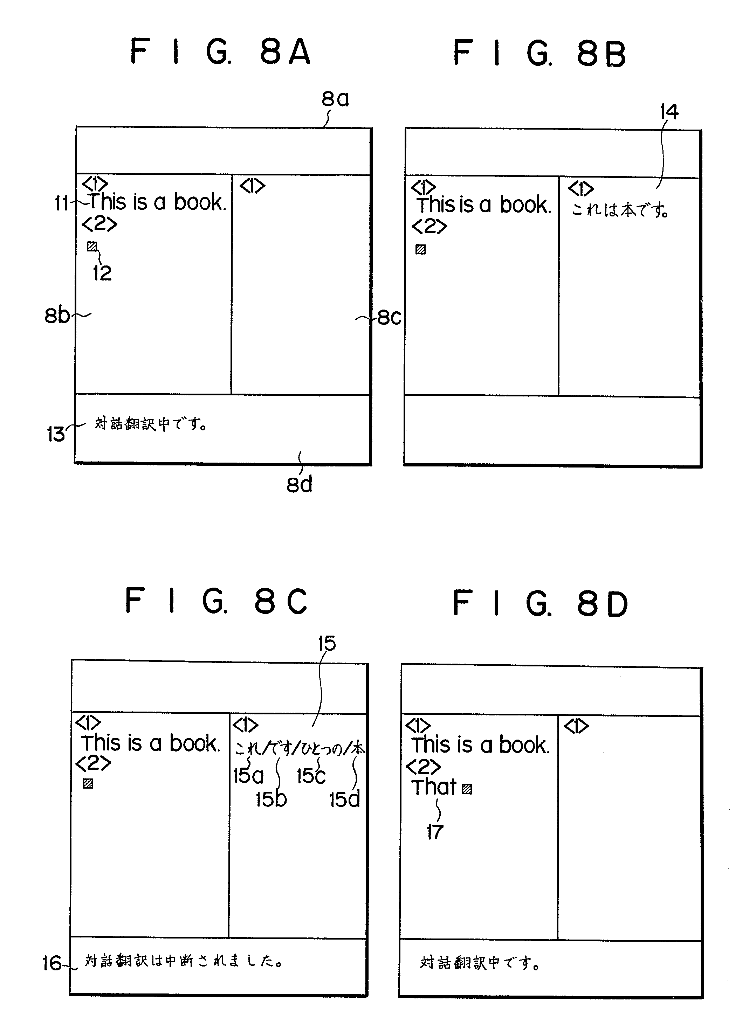

Fig. 8B shows a display state when interactive translation processing of original sentence Il is completed. Translated sentence "kore-wa hon desu." l4 obtained by the translation processing is displayed with the same sentence number "<l>" as original sentence Il in translated sentence display area 8c.

Fig. 8C shows a display state when interruption of translation processing is instructed during the interactive translation processing of original sentence Il. Partial translations for the respective processing units of original sentence Il are obtained as transient information of the translation processing, and these partial translations l5 are displayed with the same sentence number "<l>" as that of original sentence Il in translated sentence display area 8c. Message l6 indicating that "translation processing is interrupted" is displayed in processing state display area 8d. Note that partial translations l5 consist of "kore (= this)" l5a, "desu (= is)" l5b, "hitotsu-no (= a)" l5c, and "hon (= book)" l5d.

During execution of interactive translation, next original sentence l7 can be input before the translation result is obtained as shown in Fig. 8D, as a matter of course.

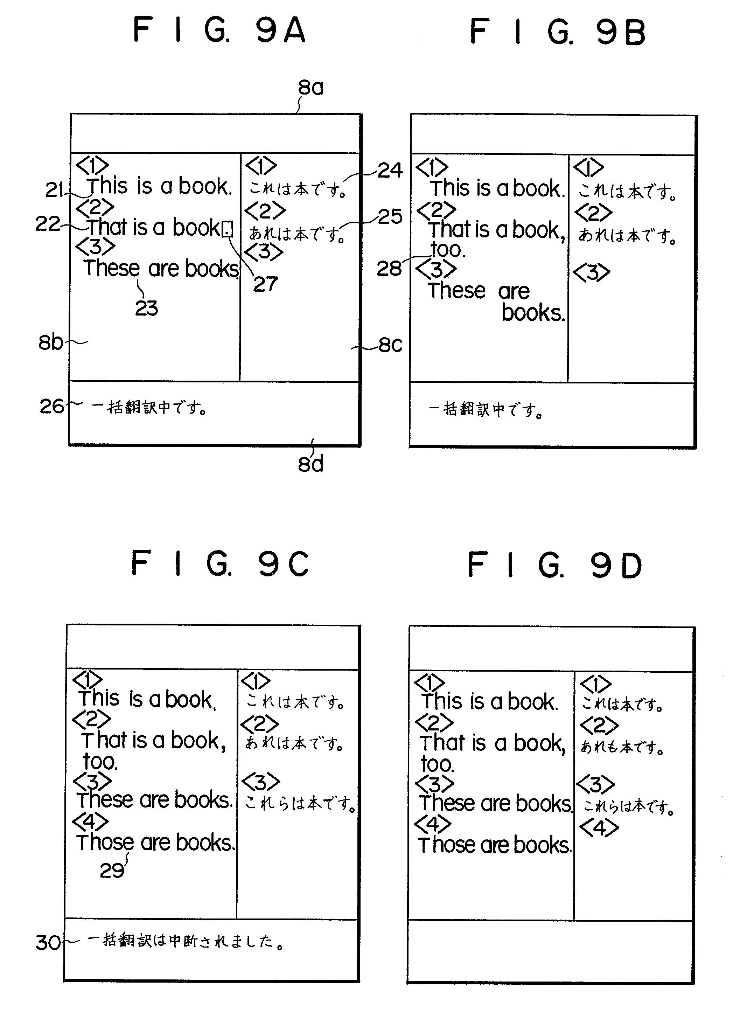

In the simultaneous translation mode, display screens shown in, e.g., Figs. 9A to 9D are presented.

As shown in Fig. 9A, original sentences "This is a book." 2l, "That is a book." 22, and "There are books " 23 are sequentially displayed together with sentence numbers "<l>", "<2>", and "<3>", respectively, in area 8b and translated sentences "kore-wa hon desu." 24 and "are-wa hon desu." 25 are sequentially displayed together with sentence numbers "<l>" and "<2>" at positions in area 8c corresponding to original sentences 2l and 22. Message 26 indicating that "simultaneous translation processing being executed" is displayed in area 8d.

As shown in Fig. 9B, an input original sentence can be partially corrected during simultaneous translation For example, period "." in original sentence 22 shown in Fig. 9A can be corrected to be ", too." 28, as shown in Fig. 9B.

When simultaneous translation further progresses and interruption is instructed during translation processing of fourth sentence 29, translation processing of fourth sentence 29 is immediately interrupted, as shown in Fig. 9C, and message 30 indicating that "simultaneous translation processing is interrupted" is displayed in area 8d. In this case, translated parts of the sentence, i.e., transient translation information, are not output unlike in the above-mentioned interactive translation.

Thereafter, when restart of simultaneous translation is instructed, translation processing is resumed from a sentence which is being translated when the processing is interrupted, as shown in Fig. 9D.

With the machine translation system of the present invention as described above, when interruption of translation processing is instructed during interactive translation where translation processing of an input original sentence is executed while receiving original sentences, transient information obtained by the translation processing is displayed. More specifically, the transient information (i.e., translated parts) of the translation processing is displayed without being cancelled. For this reason, when a great deal of time is required for translation processing of a given input original sentence, the translated parts of the sentence are obtained upon generation of an interrupt instruction of the translation processing, and are subjected to editing processing to complete a translated sentence. Therefore, machine translation processing can be easily interrupted by an operator's decision, thus improving translation processing efficiency.

As described above, in this system, transient information obtained by the translation processing is not cancelled but can be represented to the operator. Therefore, the transient information can be effectively utilized for subsequent translation processing. Translation processing speed and efficiency can be virtually improved, thus reducing mental and physical loads of the operator.

The present invention is not limited to the above embodiment.

The translation system from English to Japanese has been explained. However, for example, the present invention can be applied to a translation system from Japanese to English, and to ones for other languages.

In the above embodiment, the interrupt instruction of the translation processing is supplied from input unit I by an operator through editing controller 3. However, a translation time lapse may be counted in controller 3 or in CPU 4c of processor 4, and when a preset time has elapsed, a translation interrupt instruction may be automatically generated. A timer device for counting the translation time lapse may be arranged to generate the interrupt instruction.

Various other changes and modifications may be made within the spirit and scope of the invention.

**Claims**

I. A machine translation system comprising:
input means (I) for inputting an original sentence;
dictionary means (5) for storing language information used in translation processing;
translation processing means (3, 4) for translating the original sentence supplied through said input means with reference to the language information stored in said dictionary means;
output means (7, 8, 9) for outputting a translated sentence obtained by said translation processing means;
interrupt instruction means (3) for instructing interruption of the translation processing; and
interrupt processing means (4) for interrupting the translation processing of said translation processing means (3, 4) in response to an instruction from said interrupt instruction means (3), and for causing said output means (7, 8, 9) to output translated parts obtained for each predetermined translation processing unit being processed when the instruction is given from said interrupt instruction means (3).

2. A system according to claim I, characterized in that the predetermined translation processing unit is a sentence.

3. A system according to claim I, characterized in that said translation processing means (3, 4) has two processing modes consisting of a simultaneous translation mode for automatically translating the original sentence in the predetermined translation processing units so as to obtain the translated sentence and an interactive translation mode in which processing sequentially progresses to complete the translated sentence such that translation possibilities obtained from an original sentence are output and an appropriate translation possibility is selected therefrom by an operator, and said interrupt processing means includes means (4) for, when the interrupt instruction is supplied during processing in the interactive translation mode, outputting the translated parts obtained as a transient result for the predetermined translation processing unit during translation processing, and thereafter interrupting the translation processing.

4. A system according to claim 3, characterized in that the predetermined translation processing unit is a sentence.

5. A system according to claim I, characterized in that said translation processing means (3, 4) has two processing modes consisting of a simultaneous translation mode for automatically translating the original sentence in the predetermined translation processing units so as to obtain the translated sentence and an interactive translation mode in which processing sequentially progresses to complete the translated sentence such that translation possibilities obtained from an original sentence are output and an appropriate translation possibility is selected therefrom by an operator, and said interrupt processing means includes means (4) for, when the interrupt instruction is supplied during processing in the simultaneous translation mode, immediately interrupting the processing for the predetermined translation processing unit at that time, and for, when the interrupt instruction is supplied during processing in the interactive translation mode, outputting the translated parts obtained as a transient result for the predetermined translation processing unit during translation processing, and thereafter interrupting the translation processing.

6. A system according to claim 5, characterized in that the predetermined translation processing unit is a sentence.

7. A system according to claim l, characterized in that said interrupt instruction means includes switch means (lf) selectively operated by an operator.

8. A system according to claim l, characterized in that said interrupt instruction means includes timepiece means (3: 4c) for virtually measuring a time lapse from when translation processing for the predetermined translation processing unit subjected to processing by said translation processing means is started, and generating the interrupt instruction when the time lapse has reached a predetermined value.

9. A system according to claim 8, characterized in that the predetermined translation processing unit is a sentence.

l0. A system according to claim l, characterized in that said interrupt processing means includes means (4) for obtaining the partial translations in the predetermined translation processing unit subjected to processing by said translation processing means, and thereafter interrupting the translation processing, when interruption is instructed by said interrupt instruction means.

ll. A system according to claim l0, characterized in that the predetermined translation processing unit is a sentence.

l2. A system according to claim l, characterized in that said output means is display means (7, 8).

# F I G. 1

# F I G. 2

# F I G. 3

EDITING AREA ~8a

8

8b~ ORIGINAL SENTENCE DISPLAY AREA

TRANSLATED SENTENCE DISPLAY AREA ~8c

PROCESSING STATE DISPLAY AREA

8d

F I G. 4

# FIG. 5

TRANSLATION INTERRUPT SIGNAL

TRANSLATION INTERRUPT CONTROLLER — 4f

TRANSLATION MODE FLAG — 4g

TRANSLATION CONTROL FLAG — 4c

ORIGINAL SENTENCE POINTER — 4b

EDITING CONTROLLER — 3

CPU

DICTIONARY SECTION — 5

ORIGINAL SENTENCE BUFFER — 4a

TRANSLATED SENTENCE BUFFER — 4d

4

0230340

# F I G. 6

```
        │
        ▼
┌─────────────────────┐
│ PERFORM INITIALIZATION │ ～O
│      PROCESSING       │
└─────────────────────┘
        │
        ▼
┌─────────────────────┐  P
│ PERFORM MORPHO-      │ ╱ ── ── ──(INFLECTION
│ LOGICAL  ANALYSIS    │            DICTIONARY 5a)
└─────────────────────┘
        │
        ▼
┌─────────────────────┐  Q
│  SEARCH DICTIONARY   │ ╱ ── ── ──(WORD DICTIONARY 5b)
└─────────────────────┘
        │
        ▼
┌─────────────────────┐
│  CONTROL  ANALYSIS   │～R
└─────────────────────┘
        │
        ▼
┌─────────────────────┐
S～│ PERFORM SYNTACTIC    │ ── ── ──(ANALYTIC GRAMMAR 5c)
│      ANALYSIS        │
└─────────────────────┘
        │
        ▼
      ╱ T ╲
   ╱  IS ANALYSIS  ╲  YES
  ╱  SUCCESSFUL?   ╲────┐
   ╲             ╱      │
      ╲  NO  ╱          │
        ▼               │
      ╱ U ╲             │
OFF ╱ TRANSLATION ╲     │
◄──╱ CONTROL FLAG? ╲    │
   ╲             ╱      │
      ╲  ON  ╱          │
        ▼               │
┌─────────────────────┐ │
V～│ TRANSFER STRUCTURE  │ ── ── ──(TRANSFER GRAMMAR 5d)
└─────────────────────┘ │
        │               │
        ▼   W           │
      ╱  ╲              │
   ╱  IS TRANSFER ╲─────┘
  ╱  SUCCESSFUL?  ╲
   ╲            ╱
      ╲    ╱
        ▼
┌─────────────────────┐  X
│ GENERATE SENTENCE    │ ╱ ── ── ──(SYNTACTIC GRAMMAR 5e)
│      STRUCTURE       │
└─────────────────────┘
        │
        ▼
┌─────────────────────┐  Y
│  GENERATE MORPHEME   │ ╱ ── ── ──(MORPHEMIC GRAMMAR 5f)
└─────────────────────┘
        │
        ▼
      ╱  Z ╲
NO ╱    IS    ╲
◄──╱ ONE SENTENCE ╲
   ╲ COMPLETED? ╱
      ╲    ╱
        ▼ YES
```

0230340

# F I G. 7

0230340

# FIG. 8A

8a

<I>
11 This is a book.
<2>
12

8b

<I>

13 対話翻訳中です。

8d

# FIG. 8B

14

<I>
This is a book.
<2>

<I>
これは本です。

8c

# FIG. 8C

15

<I>
This is a book.
<2>

<I>
これ/です/ひとつの/本
15a    15c
  15b      15d

16 対話翻訳は中断されました。

# FIG. 8D

<I>
This is a book.
<2>
That

17

<I>

対話翻訳中です。

0 2 3 0 3 4 0

# F I G. 9A

<1> This is a book.
<2> That is a book□
<3> These are books

<1> これは本です。
<2> あれは本です。
<3>

一括翻訳中です。

# F I G. 9B

<1> This is a book.
<2> That is a book, too.
<3> These are books.

<1> これは本です。
<2> あれは本です。
<3>

一括翻訳中です。

# F I G. 9C

<1> This is a book.
<2> That is a book, too.
<3> These are books.
<4> Those are books.

<1> これは本です。
<2> あれは本です。
<3> これらは本です。

一括翻訳は中断されました。

# F I G. 9D

<1> This is a book.
<2> That is a book, too.
<3> These are books.
<4> Those are books.

<1> これは本です。
<2> あれも本です。
<3> これらは本です。
<4>